# EUROPÄISCHE PATENTSCHRIFT

(11) **EP 4 526 986 B1**
(45) Veröffentlichungstag und Bekanntmachung des Hinweises auf die Patenterteilung: **20.05.2026**
(21) Anmeldenummer: 23724855.4
(22) Anmeldetag: 11.05.2023
(51) Int. Cl.: H02K 15/04

(54) **VERFAHREN UND VORRICHTUNG ZUR HERSTELLUNG EINER WICKELMATTE FÜR EINEN STATOR ODER EINEN ROTOR EINES ELEKTRISCHEN MOTORS**
METHOD AND DEVICE FOR PRODUCING A WINDING MAT FOR A STATOR OR A ROTOR OF AN ELECTRIC MOTOR
PROCÉDÉ ET DISPOSITIF DE PRODUCTION D'UN VOILE D'ENROULEMENT POUR UN STATOR OU UN ROTOR D'UN MOTEUR ÉLECTRIQUE

(30) Priorität: 17.05.2022 DE 102022204823
(43) Veröffentlichungstag der Anmeldung: 26.03.2025
(73) Patentinhaber: ZF Friedrichshafen AG, 88046 Friedrichshafen (DE)
(72) Erfinder: EBERT, Matthias, 97267 Himmelstadt (DE); SCHNEIDER, Ralf, 97440 Werneck (DE)
(74) Vertreter: Tergau & Walkenhorst Intellectual Property GmbH
(86) Internationale Anmeldenummer: PCT/EP2023/062641
(87) Internationale Veröffentlichungsnummer: WO 2023/222516

(56) Entgegenhaltungen:
- EP-A2- 1 639 687
- DE-A1- 102019 220 415
- FR-A1- 2 968 858
- US-A1- 2010 064 505
- US-B2- 8 082 770
- US-B2- 8 230 578

## Beschreibung

Die Erfindung betrifft ein Verfahren und eine Vorrichtung zur Herstellung einer Wickelmatte für einen Stator oder einen Rotor eines elektrischen Motors.

Die Bedeutung von Elektromotoren hat im Zuge der Energie- und Verkehrswende stark zugenommen, da der Bedarf nach Antrieben, die ohne fossile Brennstoffe auskommen, ansteigt. Ein herkömmlicher Elektromotor besteht aus einem Stator und einem Rotor. Wenn Strom durch die um den Rotor gewickelten Leiter fließt, bilden sich ein Nord- und ein Südpol aus und der Rotor beginnt sich aufgrund des äußeren Magnetfelds des Stators zu drehen. Die Art des Wickelns für Stator und Rotor spielt für die Effizienz des Elektromotors eine wesentliche Rolle.

Beim Wickeln der Leiter zu einer Wickelmatte, die um oder an dem Stator oder dem Rotor befestigt wird, werden die Leiter mechanisch beansprucht. Um einen hohen Wirkungsgrad, eine hohe Laufruhe, einen niedrigen Geräuschpegel und eine hohe Robustheit des Elektromotors gewährleisten zu können, muss der Wickelprozess reproduzierbar sein und die Leiter möglichst wenig mechanisch beanspruchen. Zudem ist eine hohe Beanspruchung des Leitermaterials während des Wickelns auch insofern nachteilig, als dass dadurch ein erhöhter Materialaufwand bei der Produktion entsteht.

Es gibt unterschiedliche Verfahren zur Herstellung einer Wickelmatte für einen Stator oder einen Rotor. In der Regel werden ein oder mehrere Wickeldrähte oder Leiter, diese können beispielsweise Runddrähte oder Flachdrähte sein, über eine Zuführeinrichtung einem Wickelschwert oder einem Steckbrett zugeführt und auf diesem aufgewickelt.

Das Wickeln um ein Steckbrett ist in der WO 2019/130232 A1 offenbart. Dazu werden Leiter und ein Steckbrett bereitgestellt. Letzteres weist Schlitze für die Aufnahme der Leiter auf. Das Bereitstellen der Leiter erfolgt mittels einer oder mehrerer Drahtführungseinrichtungen. Die Leiter werden in die Schlitze des Steckbretts eingeführt, sodass Teile der Leiter innerhalb der Schlitze liegen und andere Teile der Leiter über die Schlitze hinaus ragen. Aus den über die über die Schlitze hinaus ragenden Teilen der Leiter werden jeweils Verbindungen (Wickelköpfe) zu den im nächstliegenden Schlitz anzubringenden Teilen (Stegen) der Leiter geformt.

In der DE 10 2004 035 084 A1 wird ein Wickelverfahren für das mehrfache Wickeln um ein Wickelschwert beschrieben. Für das Wickelverfahren wird eine Schablone benötigt, auf der aus n parallelen Drähten Stege, die sich auf der Schablone befinden, und Wickelköpfe, die über die Schablone hinausragen, in einem ersten Arbeitsschritt erzeugt werden. Die Wickelköpfe werden vorzugsweise V- bzw. giebelförmig durch an der Schablone angebrachte Formkörper erzeugt. Nach dem Erzeugen der Stege und der Wickelköpfe werden diese in einem zweiten Arbeitsschritt um das n-fache des Zwischenabstandes entlang einer Drehachse der Schablone verschoben. Die vorgenannten Arbeitsschritte werden solange wiederholt, bis eine Anzahl an Wicklungen erzeugt worden ist, die einer Anzahl von Rotor- oder Statornuten entspricht.

Aus der DE 197 39 353 A1 ist ein Verfahren und eine Vorrichtung zur Herstellung einer verteilten Wellenwicklung für elektrische Motoren, insbesondere solche mit hoher Polzahl, bekannt. Bei dem offenbarten Verfahren wird eine Spulengruppe, die aus mehreren Drähten bzw. Leitern besteht und einer ersten Phase zugeordnet ist, auf einer drehbaren Schablone wellenförmig erzeugt und an einen axial fluchtenden Spulenaufnehmer übergeben. Dazu wird die Spulengruppe abgestreift. Anschließend wird eine weitere Spulengruppe der gleichen Phase mit einer Schaltverbindung zur vorherigen Spulengruppe gewickelt und an denselben Spulenaufnehmer übergeben. Durch das Verfahren können mehrere Drähte parallel verarbeitet werden, ohne dass sich die einzelnen Drähte kreuzen.

Ein weiteres Wickelverfahren mit einem Wickelschwert wird in der US 7 281 312 B2 beschrieben. Das Verfahren ist den vorher beschriebenen Verfahren ähnlich, umfasst jedoch zusätzlich den Transfer der erzeugten Wickelmatte in ein Transfertool, einen Rotor oder einen Stator.

Aus der US 2010/064 505 A1 ist ein Verfahren zur Herstellung eines Stators für eine dynamoelektrische Vorrichtung bekannt.

Aus der EP 1 639 687 A2 ist ein Verfahren und eine Vorrichtung zum Formen von Wellenwicklungen für Rotor- und Statorblechpakete elektrischer Maschinen bekannt.

Aus der FR 2 968 858 A1 ist ein Rotor oder Stator z. B. für einen Generator eines Kraftfahrzeugs, mit durchgehenden elektrischen Leitungen bekannt, die in jede der Nuten eingesetzt sind und mit einem Satz von Wicklungen versehen sind, der höher ist als ein anderer Satz von Wicklungen und einen peripheren Verlauf bildet.

Aus der DE 10 2019 220 415 A1 Vorrichtung und Verfahren zum Biegen elektrisch leitfähiger Profilabschnitte für Elektromotoren (Hairpin) bekannt.

Aus der US 8 230 578 B2 ist ein Verfahren zur Herstellung einer Wicklung einer elektrischen Maschine bekannt.

Aus der US 8 082 770 B2 ist eine Vorrichtung und Verfahren zur Formung von Drahtschleifen für eine dynamoelektrische Maschine bekannt.

Ein wesentliches Problem der bereits beschriebenen Verfahren ist, dass Anpassungen bei der Dimensionierung und dem (Ab-)Transport, vor allem bei größeren Längen der Wickelmatte, nicht oder nur mit erheblichem Aufwand möglich sind, da die Länge der Schablone (Steckbrett, Wickelschwert, etc.), auf der die Drähte bzw. die Leiter aufgewickelt werden im Wesentlichen der Länge der herzustellenden Wickelmatte entspricht.

Auch in der EP 3 182 568 B2 wird ein Verfahren zur Herstellung einer Wickelmatte mit einem Wickelschwert beschrieben. Bei dem beschriebenen Verfahren werden einzelne oder mehrere Drähte um ein Wickelschwert mehrfach gewickelt. Dazu können Haltemittel vorhanden sein, die während des Wickelns einen Abschnitt der Drähte festhalten, während ein anderer Abschnitt der Drähte relativ dazu bewegt wird. Das Wickeln erfolgt jedoch nicht solange, bis eine Anzahl an Wicklungen erreicht ist, die der Anzahl von Rotor- oder Statornuten entspricht, sondern die gewickelten Drähte werden über eine sich mit einer Wickeleinrichtung drehenden Transporteinrichtung, die als Bandförderer oder Zahnriemenförderer ausgebildet ist, direkt nach dem Wickeln abtransportiert. Das hat den Vorteil, dass die Länge der herzustellenden Wickelmatte flexibel an einen Stator oder einen Rotor angepasst werden kann.

Für weitere Beispiele von bekannten Verfahren zur Herstelllung von Wickelmatten aus dem Stand der Technik können US 2010/064505 A1, EP 1 639 687 A2, FR 2 968 858 A1, DE 10 2018 220 415 A1, US 8 230 578 B2 oder US 8 082 770 B2 genannt werden.

Bei den beschriebenen Wickelverfahren werden die Leiter von dem Wickelschwert oder Steckbrett nach dem Wickeln abgestreift und anschließend flach zusammengedrückt. Das Zusammendrücken der Wickelmatte bzw. der Leiter beansprucht die Isolierung der Leiter sehr stark. Bei der Nutzung eines rotierenden Steckbretts oder Wickelschwerts ist zudem eine Schrittweitenänderung nur eingeschränkt möglich. Dies hat zur Folge, dass die parallel gewickelten Leiter untereinander asymmetrisch werden und sich Kreisströme ausbilden können. Diese führen beim Betrieb zu Verlusten in den Leitern und tragen nicht zur Drehmomentbildung bei.

Die Aufgabe der Erfindung ist es, ein Wickelverfahren zur Herstellung einer Wickelmatte für einen Stator oder einen Rotor eines elektrischen Motors bereitzustellen, das ohne die Verwendung eines Wickelschwerts, eine geringere mechanische Belastung der Leiter verursacht und eine höhere Gestaltungsflexibilität für die Wickelmatte zulässt.

Die Aufgabe wird erfindungsgemäß gelöst durch ein Verfahren zur Herstellung einer Wickelmatte für einen Stator oder einen Rotor eines elektrischen Motors, bei dem zwei Leiterstränge mit je mindestens einem Leiter bereitgestellt werden, die Leiterstränge jeweils zu einer Aufnahmevorrichtung, die mit einer Führung verbunden und in einer x- , einer y- und einer z-Richtung eines kartesischen Koordinatensystems verfahrbar ist, entlang der x-Richtung zugestellt werden, wobei je eine der Aufnahmevorrichtungen einen Leiterstrang aufnimmt, gegenüberliegend angeordnete Wickelköpfe geformt werden, wobei mit entgegengesetztem Richtungssinn in einer z-Richtung jedem Leiterstrang eine erste Komponente eines formgebenden Werkzeugs zugestellt wird, wobei jeweils eine erste Flanke des Wickelkopfs geformt wird und anschließend eine zweite Komponente des formgebenden Werkzeugs zugestellt wird, wobei jeweils eine zweite Flanke des Wickelkopfs geformt wird und die Wickelköpfe jeweils in den formgebenden Werkzeugen fixiert werden, ein Lagensprung mit entgegengesetztem Richtungssinn in der y-Richtung in jeweils einen Übergang von der ersten Flanke zur zweiten Flanke der Wickelköpfe geprägt wird, in der z-Richtung verlaufende Stege geformt werden, wobei die Stege durch eine Bewegung der Aufnahmevorrichtungen auf einer Kurvenbahn geformt werden, eine Hubbewegung der Aufnahmevorrichtungen in y-Richtung ausgeführt wird, wobei die Leiterstränge an eine Fördervorrichtung übergeben und die Leiterstränge um je einen Fördertakt in x-Richtung transportiert werden und das Zuführen der Leiterstränge, das Formen von Wickelköpfen, das Prägen der Lagensprünge, das Formen der Stege, das Ausführen der Hubbewegung und der Transport der Leiterstränge wiederholt werden, bis eine Wickelmatte mit einer definierten Anzahl an Wicklungen, die durch beide Leiterstränge gebildet werden und je zwei Wickelköpfe und vier Stege umfassen, erzeugt worden ist.

Die erste Flanke des Wickelkopfs und die zweite Flanke des Wickelkopfs werden jeweils für jeden Leiter der Leiterstränge geformt

Zur Schonung des Leitermaterials ist es sinnvoll, auf ein Steckbrett bzw. ein Wickelschwert zu verzichten. Das hat den Vorteil, dass Wickelmatten in nahezu beliebiger Länge und Form, bei vergleichsweise geringer Mattenbreite und Mattenhöhe hergestellt sowie flexibel Leiter während des Verfahrens ein- und ausgeschleust werden können.

Vorteilhaft weisen die Leiterstränge eine gleiche Anzahl an Leitern und jeweils mehr als einen Leiter auf und das Zuführen der Leiterstränge, das Formen von Wickelköpfen, das Prägen der Lagensprünge, das Formen der Stege, das Ausführen der Hubbewegung und der Transport der Leiterstränge werden jeweils gleichzeitig für alle Leiter eines Leiterstrangs durchgeführt.

Während des Verfahrens können die formgebenden Werkzeuge ausgewechselt werden, um eine Schrittweite der Wicklungen innerhalb der erzeugten Wickelmatte zu variieren. Die Schrittweite gibt den Abstand zweier benachbarter Stege eines Leiters an.

Es ist von Vorteil, wenn der Lagensprung geprägt wird, indem die erste Komponente und die zweite Komponente des formgebenden Werkzeugs relativ zueinander in y-Richtung verschoben werden. Es ist ebenso von Vorteil, wenn der Lagensprung während des Formens der Wickelköpfe geprägt wird. Dadurch kann das Verfahren beschleunigt werden. Die Wickelköpfe sind vorteilhaft giebelförmig.

Um das Formen der Stege zu vereinfachen und zu beschleunigen, kann beim Formen der Stege je eine dritte Komponente den Leiterstrang in z-Richtung verformen, wobei die dritte Komponente in z-Richtung verfahren wird.

Die Aufgabe wird erfindungsgemäß gelöst durch eine Vorrichtung zur Herstellung einer Wickelmatte für einen Stator oder einen Rotor eines elektrischen Motors, die zwei Aufnahmevorrichtungen, die jeweils mit einer Führung verbunden und in einer x-, einer y- und einer z-Richtung eines kartesischen Koordinatensystems verfahrbar sind, zwei formgebende Werkzeuge, jeweils mit einer ersten Komponente und einer zweiten Komponente, die relativ zueinander in einer y-Richtung eines kartesischen Koordinatensystems verschoben werden können, und eine Fördervorrichtung, die zum Transport der Leiterstränge um je einen Fördertakt in x-Richtung ausgelegt ist, umfasst.

Die Vorrichtung ist zum Ausführen des Verfahrens zur Herstellung einer Wickelmatte für einen Stator oder einen Rotor eines elektrischen Motors ausgebildet.

Vorteilhaft können die Führungen jeweils einen Schlitten und Schienen, auf denen der Schlitten geführt ist, umfassen, wobei eine der Führungen oberhalb der Leiterstränge und die andere der Führungen unterhalb der Leiterstränge angeordnet ist.

Die Aufnahmevorrichtung kann einen Biegekopf mit einem Drahthalter und einer Biegewange aufweisen.

Es ist von Vorteil, wenn die formgebenden Werkzeuge jeweils eine dritte Komponente aufweisen, die in z-Richtung verfahrbar ist.

Die Erfindung soll nachfolgend durch Ausführungsbeispiele anhand von Zeichnungen näher beschrieben werden. Hierzu zeigen:
- Fig. 1: Eine Ansicht einer Ausführung einer Vorrichtung zur Herstellung einer Wickelmatte,
- Fig. 2a-f: jeweils einzelne Verfahrensschritte zur Herstellung einer Wickelmatte in einer Draufsicht,
- Fig. 3: eine Ansicht einer vorteilhaften Ausführung einer Aufnahmevorrichtung,
- Fig. 4: eine Ansicht einer vorteilhaften Ausführung eines formgebenden Werkzeugs,
- Fig. 5: eine Ansicht des Prägens eines Lagensprungs mit dem formgebenden Werkzeug.

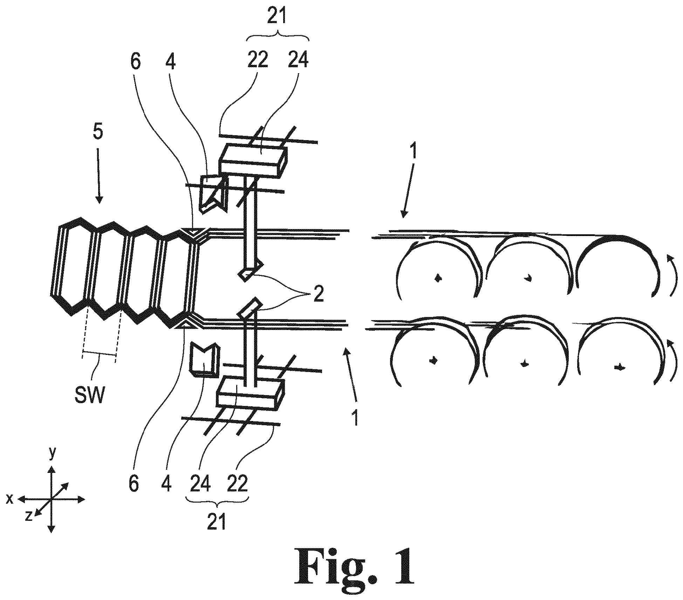

Eine Ansicht einer Ausführung einer Vorrichtung zur Herstellung einer Wickelmatte 5 ist in Fig. 1 gezeigt. Die Vorrichtung weist zwei Aufnahmevorrichtungen 2 auf, die jeweils mit einer Führung 21 verbunden und in einer x-, einer y- und einer z-Richtung eines kartesischen Koordinatensystems verfahrbar sind. Die Führungen 21 umfassen jeweils einen Schlitten 23 und Schienen 22, auf denen der Schlitten 23 geführt ist. Eine der Führungen 21 ist oberhalb der Leiterstränge 1 angeordnet, womit einer der Schlitten 23 in einer ersten Ebene, die parallel zu einer x-z-Ebene ist, oberhalb der Leiterstränge 1 verfahrbar ist. Die andere der Führungen 21 ist unterhalb der Leiterstränge 1 angeordnet, womit der andere der Schlitten 23 in einer zweiten Ebene, die parallel zu der x-z-Ebene Leiterstränge 1 ist, unterhalb der Leiterstränge 1 verfahrbar ist. Die Leiterstränge 1 sind vor dem Bereitstellen auf Spulen aufgerollt. Die Leiterstränge 1 werden entlang der x-Richtung eines kartesischen Koordinatensystems jeweils einer der zwei Aufnahmevorrichtungen 2 zugeführt, in denen die Leiterstränge 1 aufgenommen werden. Die Leiterstränge 1 enthalten jeweils mindestens einen Leiter und die Aufnahmevorrichtungen 2 nehmen jeweils alle Leiter eines Leiterstrangs 1 auf. Eine Fördervorrichtung 6 ist in x-Richtung aus Sicht der Spulen hinter den Aufnahmevorrichtungen 2 angeordnet. Die Fördervorrichtung 6 ist zum Transport der Leiterstränge 1 um je einen Fördertakt in x-Richtung ausgelegt.

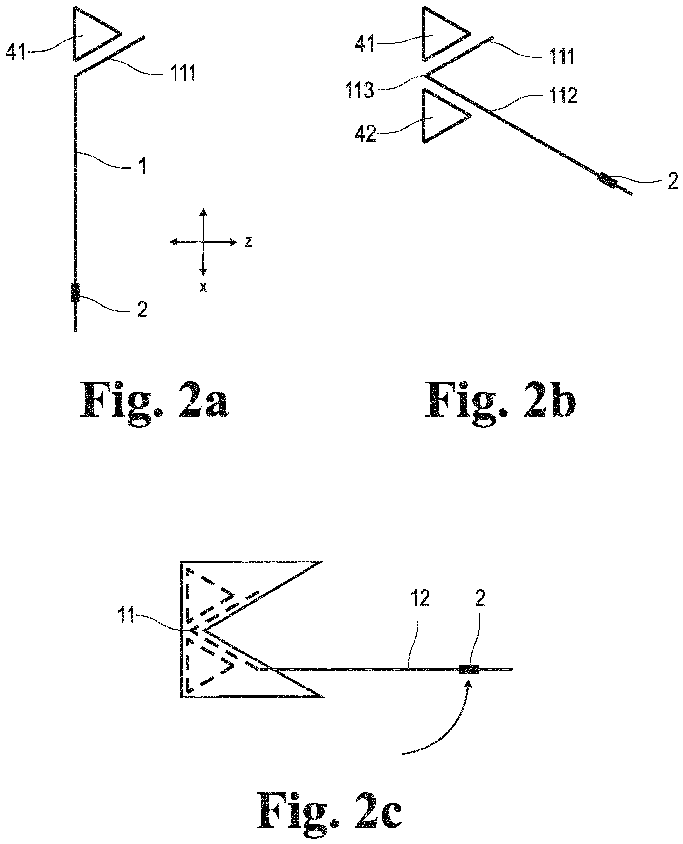

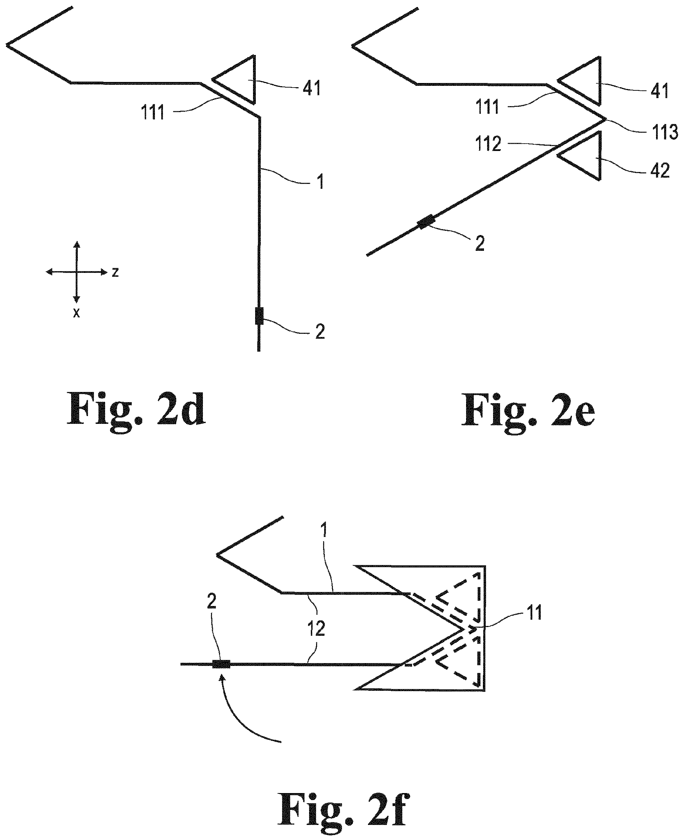

In den Fig. 2a-f sind jeweils einzelne Verfahrensschritte zur Herstellung einer Wickelmatte 5 für einen Leiterstrang 1 veranschaulicht. Der andere Leiterstrang 1 wird zeitgleich analog gewickelt, mit gegenüberliegend angeordneten Wickelköpfen 11. In dem in Fig. 2a dargestellten Verfahrensschritt ist der Leiterstrang 1 bereits von der Aufnahmevorrichtung 2 aufgenommen. Dem Leiterstrang 1, vereinfacht als einzelner Leiter dargestellt, wird eine erste Komponente 41 eines formgebenden Werkzeugs 4 zugestellt. Die erste Komponente 41 ist vereinfacht als gleichseitiges Dreieck dargestellt. Durch das Zustellen wird eine erste Flanke 111 eines Wickelkopfs 11 geformt. Anschließend wird, wie in Fig. 2b gezeigt, dem Leiterstrang 1 eine zweite Komponente 42 des formgebenden Werkzeugs 4 zugestellt. Fig. 2c zeigt den in dem formgebenden Werkzeug 4 fixierten Wickelkopf 11. Der Wickelkopf 11 wird vorteilhaft durch ein Blech, das von oben (entgegen der y-Richtung) auf die erste Komponente 41, die zweite Komponente 42 und den Wickelkopf 11 angepresst wird, gehalten, wie in Fig. 2c dargestellt. Nach dem Fixieren führt die Aufnahmevorrichtung 2 eine Kurvenbewegung aus, wodurch der Leiterstrang 1 gebogen und ein Steg 12 geformt wird. Nach dem Formen des Wickelkopfs 11 und des Stegs 12 wird eine Hubbewegung der Aufnahmevorrichtungen 2 in y-Richtung ausgeführt, um die Leiterstränge 1 an die Fördervorrichtung 6 zu übergeben. Anschließend wird der Leiterstrang 1 durch die Fördervorrichtung 6 um einen Fördertakt, der vorteilhaft einer Nutbreite eines Stators oder eines Rotors entspricht, in x-Richtung transportiert und die vorgenannten Verfahrensschritte wiederholt, bis eine Wickelmatte 5 mit einer definierten Anzahl an Wicklungen, die jeweils durch beide Leiterstränge 1 gebildet werden und je zwei Wickelköpfe 11 und vier Stege 12 umfassen, erzeugt worden ist. Die Stege 12 werden jeweils, abgesehen von den jeweils ersten und letzten Stegen 12 der Wickelmatte 5, zwei Wicklungen zugeordnet. In den Fig. 2d-f wird ein nächster Wickelkopf 11 und ein nächster Steg 12 geformt. Parallel zu den dargestellten Verfahrensschritten wird jeweils gegenüberliegend ein weiterer Leiterstrang 1 geformt (nicht dargestellt).

Eine Schrittweite SW der erzeugten Wicklungen hängt, wie auch die Form der Wickelköpfe 11, von den im Wickelverfahren verwendeten formgebenden Werkzeugen 4 ab. Diese können im Laufe des Verfahrens ausgetauscht werden, wodurch die hergestellte Wickelmatte 5 Wicklungen mit unterschiedlichen Schrittweiten SW aufweisen kann.

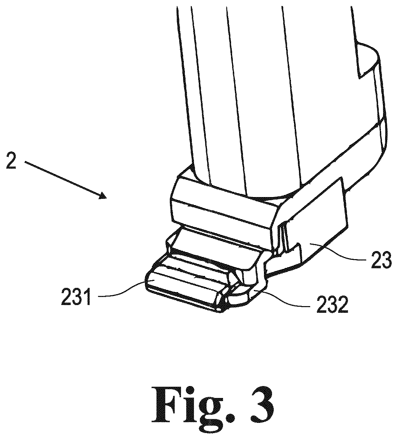

Fig. 3 zeigt eine vorteilhafte Ausführung der Aufnahmevorrichtung 2. Die Aufnahmevorrichtung 2 weist einen Biegekopf 23 mit einem Drahthalter 231 und einer Biegewange 232 auf. Ein oder mehrere Leiter eines Leiterstrangs 1 können zwischen dem Drahthalter 231 und der Biegewange 232 aufgenommen werden. Die Leiterstränge 1 sollen bei der Aufnahme in die Aufnahmevorrichtungen 2 möglichst wenig mechanisch beansprucht werden.

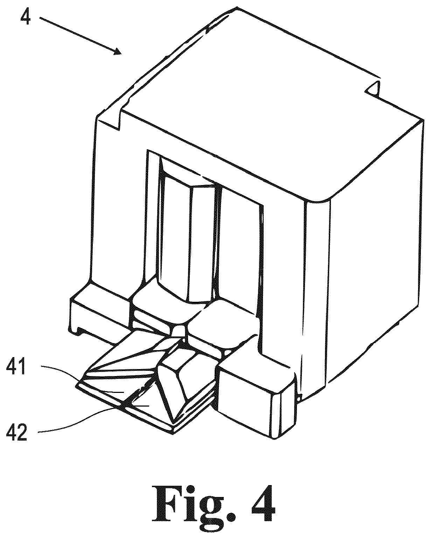

In Fig. 4 ist eine vorteilhafte Ausführung des formgebenden Werkzeugs 4 dargestellt. Das formgebende Werkzeug 4 weist vorteilhaft eine erste Komponente 41 und eine zweite Komponente 42 auf. Die erste Komponente 41 und die zweite Komponente 42 können jeweils einen Lineartrieb aufweisen und relativ zueinander in y-Richtung verfahrbar sein. Es kann auch nur die erste Komponente 41 oder die zweite Komponente 42 in y-Richtung verfahrbar sein.

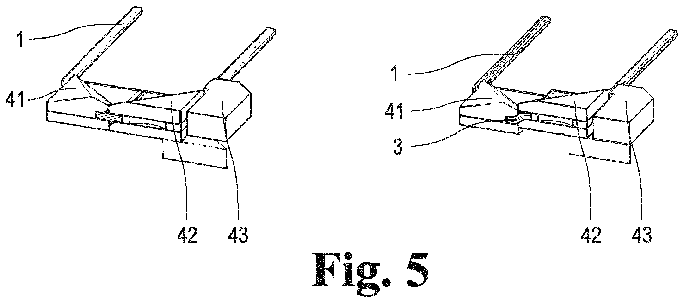

Das Prägen eines Lagensprungs 3 ist in Fig. 5 dargestellt. Der Wickelkopf 11 ist in dem formgebenden Werkzeug 4 (nicht vollständig dargestellt) fixiert. Durch ein Verfahren der ersten Komponente 41 und der zweiten Komponente 42 relativ zueinander in y-Richtung kann der Lagensprung 3 in einen Übergang 113 von der ersten Flanke 111 zu der zweiten Flanke 112 geprägt werden. Das Prägen kann vorteilhaft dafür sorgen, dass zusätzlich die Dicke des Leiterstrangs 1 oder einzelner Leiter des Leiterstrangs 1 abnimmt. Durch das Prägen ist es möglich, mehrere Leiterstränge 1 bzw. Wicklungen miteinander zu der Wickelmatte 5 zu verflechten.

In Fig. 5 ist eine dritte Komponente 43 des formgebenden Werkzeugs 4 gezeigt, die ausfahrbar ist. Die dritte Komponente 43 kann verfahren werden, um die Stege 12 zu formen.

### Bezugszeichen

- 1: Leiterstrang
- 11: Wickelkopf
- 111: erste Flanke
- 112: zweite Flanke
- 113: Übergang
- 12: Steg
- 2: Aufnahmevorrichtung
- 21: Führung
- 22: Schienen
- 23: Biegekopf
- 231: Drahthalter
- 232: Biegewange
- 24: Schlitten
- 3: Lagensprung
- 4: formgebendes Werkzeug
- 41: erste Komponente
- 42: zweite Komponente
- 43: dritte Komponente
- 5: Wickelmatte
- 6: Fördervorrichtung

- SW: Schrittweite

## Patentansprüche

1. Verfahren zur Herstellung einer Wickelmatte (5) für einen Stator oder einen Rotor eines elektrischen Motors, umfassend die folgenden Schritte:
A. Bereitstellen zweier Leiterstränge (1) mit je mindestens einem Leiter,
B. Zuführen der Leiterstränge (1) jeweils zu einer Aufnahmevorrichtung (2), die jeweils mit einer Führung (21) verbunden und in einer x-, einer y- und einer z-Richtung eines kartesischen Koordinatensystems verfahrbar ist, entlang der x-Richtung, wobei je eine der Aufnahmevorrichtungen (2) einen Leiterstrang (1) aufnimmt,
C. Formen von gegenüberliegend angeordneten Wickelköpfen (11), wobei mit entgegengesetztem Richtungssinn in einer z-Richtung jedem Leiterstrang (1) eine erste Komponente (41) eines formgebenden Werkzeugs (4) zugestellt wird, wobei jeweils eine erste Flanke (111) des Wickelkopfs (11) geformt wird und anschließend eine zweite Komponente (42) des formgebenden Werkzeugs (4) zugestellt wird, wobei jeweils eine zweite Flanke (112) des Wickelkopfs (11) geformt wird und die Wickelköpfe (11) jeweils in den formgebenden Werkzeugen (4) fixiert werden,
D. Prägen eines Lagensprungs (3) mit entgegengesetztem Richtungssinn in der y-Richtung in jeweils die erste Flanke (111) oder die zweite Flanke (112) oder einen Übergang (113) von der ersten Flanke (111) zur zweiten Flanke (112) der Wickelköpfe (11),
E. Formen von in der z-Richtung verlaufenden Stegen (12), wobei die Stege (12) durch eine Bewegung der Aufnahmevorrichtungen (2) auf einer Kurvenbahn geformt werden,
F. Ausführen einer Hubbewegung der Aufnahmevorrichtungen (2) in y-Richtung, wobei die Leiterstränge (1) an eine Fördervorrichtung (6) übergeben werden und Transport der Leiterstränge (1) um je einen Fördertakt in x-Richtung, und
G. Wiederholen der Schritte B bis F, bis eine Wickelmatte (5) mit einer definierten Anzahl an Wicklungen, die durch beide Leiterstränge (1) gebildet werden und je zwei Wickelköpfe (11) und vier Stege (12) umfassen, erzeugt worden ist.

2. Verfahren nach Anspruch 1, **dadurch gekennzeichnet,**
**dass** beide Leiterstränge (1) eine gleiche Anzahl an Leitern und jeweils mehr als einen Leiter aufweisen und die Schritte B bis F jeweils gleichzeitig für alle Leiter eines Leiterstrangs (1) durchgeführt werden.

3. Verfahren nach Anspruch 1 oder 2, **dadurch gekennzeichnet,**
**dass** während des Verfahrens die formgebenden Werkzeuge (4) ausgewechselt werden, um eine Schrittweite (SW) der Wicklungen zu variieren.

4. Verfahren nach einem der vorhergehenden Ansprüche, **dadurch gekennzeichnet, dass** der Lagensprung (3) geprägt wird, indem die erste Komponente (41) und die zweite Komponente (42) des formgebenden Werkzeugs (4) relativ zueinander in y-Richtung verschoben werden.

5. Verfahren nach einem der vorhergehenden Ansprüche, **dadurch gekennzeichnet, dass** beim Formen der Stege (12) je eine dritte Komponente (43) den Leiterstrang (1) in z-Richtung verformt, wobei die dritte Komponente (43) in z-Richtung verfahren wird.

6. Vorrichtung zur Herstellung einer Wickelmatte (5) für einen Stator oder einen Rotor eines elektrischen Motors mit einem Verfahren nach einem der Ansprüche 1 bis 5, umfassend
- zwei Aufnahmevorrichtungen (2), die jeweils mit einer Führung (21) verbunden und in einer x-, einer y- und einer z-Richtung eines kartesischen Koordinatensystems verfahrbar sind,
- zwei formgebende Werkzeuge (4), jeweils mit einer ersten Komponente (41) und einer zweiten Komponente (42), die relativ zueinander in einer y-Richtung eines kartesischen Koordinatensystems verschoben werden können, und
- eine Fördervorrichtung (6), die zum Transport der Leiterstränge (1) um je einen Fördertakt in x-Richtung ausgelegt ist.

7. Vorrichtung nach Anspruch 6, **dadurch gekennzeichnet,**
**dass** die Führungen (21) jeweils einen Schlitten (23) und Schienen (22), auf denen der Schlitten (23) geführt ist, umfassen, wobei eine der Führungen (21) oberhalb der Leiterstränge (1) und die andere der Führungen (21) unterhalb der Leiterstränge (1) angeordnet ist.

8. Vorrichtung nach Anspruch 6 oder 7, **dadurch gekennzeichnet,**
**dass** die Aufnahmevorrichtungen (2) jeweils einen Biegekopf (23) mit einem Drahthalter (231) und einer Biegewange (232) aufweisen.

9. Vorrichtung nach einem der Ansprüche 6 bis 8, **dadurch gekennzeichnet,**
**dass** die formgebenden Werkzeuge (4) jeweils eine dritte Komponente (43) aufweisen, die in z-Richtung verfahrbar ist.

## Claims

1. A method for producing a winding mat (5) for a stator or a rotor of an electric motor comprising the following steps:
A. providing two conductor strands (1) each having at least one conductor,
B. feeding the conductor strands (1) to a receiving device (2) in each case, which receiving device is connected in each case to a guide (21) and is movable in an x-, y- and z-direction of a Cartesian coordinate system along the x-direction, wherein each of the receiving devices (2) receives one conductor strand (1),
C. forming oppositely arranged winding heads (11), wherein, with an opposing direction of movement in a z-direction, a first component (41) of a forming tool (4) is advanced towards each conductor strand (1), wherein a first flank (111) of the winding head (11) is formed in each case, and subsequently a second component (42) of the forming tool (4) is advanced, wherein a second flank (112) of the winding head (11) is formed in each case, and the winding heads (11) are each fixed in the forming tools (4),
D. embossing a layer offset (3) with an opposite direction of movement in the y-direction into the first flank (111) or the second flank (112), in each case, or into a transition (113) from the first flank (111) to the second flank (112) of the winding heads (11),
E. forming webs (12) extending in the z-direction, wherein the webs (12) are formed by a movement of the receiving devices (2) along a curved path,
F. performing a lifting movement of the receiving devices (2) in the y-direction, wherein the conductor strands (1) are transferred to a conveying device (6) and transporting the conductor strands (1) by one conveying step in each case in the x-direction, and
G. repeating steps B to F until a winding mat (5) having a defined number of windings formed by both conductor strands (1) and comprising in each case two winding heads (11) and four webs (12) has been produced.

2. The method according to claim 1, **characterized in that** both conductor strands (1) have the same number of conductors and each comprise more than one conductor and the steps B to F are each carried out simultaneously for all conductors of a conductor strand (1).

3. The method according to claim 1 or 2, **characterized in that** during the method the forming tools (4) are exchanged, in order to vary a pitch (SW) of the windings.

4. The method according to any one of the preceding claims, **characterized in that** the layer offset (3) is impressed by displacing the first component (41) and the second component (42) of the forming tool (4) relative to one another in the y-direction.

5. The method according to any one of the preceding claims, **characterized in that**, during the forming of the webs (12), a third component (43) in each case deforms the conductor strand (1) in the z-direction, wherein the third component (43) is moved in the z-direction.

6. A device for producing a winding mat (5) for a stator or a rotor of an electric motor using a method according to any one of claims 1 to 5 comprising
- two receiving devices (2) which are each connected to a guide (21) and movable in an x-, y- and z-direction of a Cartesian coordinate system,
- two forming tools (4), each with a first component (41) and a second component (42) which can be displaced relative to one another in a y-direction of a Cartesian coordinate system, and
- a conveying device (6) which is designed to transport the conductor strands (1) by one conveying step in the x-direction.

7. The device according to claim 6, **characterized in that** the guides (21) each comprise a slide (23) and rails (22) on which the slide (23) is guided, wherein one of the guides (21) is arranged above the conductor strands (1) and the other of the guides (21) is arranged below the conductor strands (1).

8. The device according to claim 6 or 7, **characterized in that** the receiving devices (2) each comprise a bending head (23) with a wire holder (231) and a bending cheek (232).

9. The device according to any one of claims 6 to 8, **characterized in that** the forming tools (4) each comprise a third component (43) which is movable in the z-direction.

## Revendications

1. Procédé de production d'un voile d'enroulement (5) pour un stator ou un rotor d'un moteur électrique, comprenant les étapes suivantes :
A. mise à disposition de deux faisceaux de conducteurs (1) avec respectivement au moins un conducteur,
B. acheminement des faisceaux de conducteurs (1) respectivement à un dispositif de réception (2), qui est respectivement relié à un guidage (21) et peut être déplacé dans une direction x, une direction y et une direction z d'un système de coordonnées cartésien, le long de la direction x, sachant respectivement qu'un des dispositifs de réception (2) loge un faisceau de conducteurs (1),
C. formage de têtes d'enroulement (11) disposées de façon opposée, sachant qu'avec un sens de direction opposé dans une direction z, un premier composant (41) d'un outil donnant la forme (4) est approché de chaque faisceau de conducteurs (1), sachant respectivement qu'un premier flanc (111) de la tête d'enroulement (11) est formé et ensuite un deuxième composant (42) de l'outil donnant la forme (4) est approché, sachant respectivement qu'un deuxième flanc (112) de la tête d'enroulement (11) est formé et que les têtes d'enroulement (11) sont respectivement fixées dans les outils donnant la forme (4),
D. estampage d'un saut de position (3) avec un sens de direction opposé dans la direction y dans respectivement le premier flanc (111) ou le deuxième flanc (112) ou une transition (113) du premier flanc (111) au deuxième flanc (112) des têtes d'enroulement (11),
E. formage des nervures (12) passant dans la direction z, sachant que les nervures (12) sont formées par un mouvement des dispositifs de réception (2) sur une trajectoire courbe,
F. exécution d'un mouvement de levage des dispositifs de réception (2) dans la direction y, sachant que les faisceaux de conducteurs (1) sont transférés sur un dispositif de transport (6) et transport des faisceaux de conducteurs (1) respectivement à une cadence de transport en direction x, et
G. répétition des étapes B à F jusqu'à ce qu'un voile d'enroulement (5) ait été produit avec un nombre défini d'enroulements, qui sont formés par les deux faisceaux de conducteurs (1) et comprennent respectivement deux têtes d'enroulement (11) et quatre nervures (12).

2. Procédé selon la revendication 1, **caractérisé en ce que** les deux faisceaux de conducteurs (1) comportent un même nombre de conducteurs et respectivement plus d'un conducteur et les étapes B et F sont exécutées respectivement de façon simultanée pour tous les conducteurs d'un faisceau de conducteurs (1).

3. Procédé selon la revendication 1 ou 2, **caractérisé en ce que** les outils donnant la forme (4) sont échangés pendant le procédé pour varier la taille du pas (SW) des enroulements.

4. Procédé selon l'une quelconque des revendications précédentes, **caractérisé en ce que** la saut de position (3) est estampé, le premier composant (41) et le deuxième composant (42) de l'outil donnant la forme (4) étant déplacés l'un par rapport à l'autre dans la direction y.

5. Procédé selon l'une quelconque des revendications précédentes, **caractérisé en ce que** lors de la formation des nervures (12), un troisième composant (43) déforme à chaque fois le faisceau de conducteurs (1) dans une direction z, sachant que le troisième composant (43) est déplacé dans la direction z.

6. Dispositif de production d'un voile d'enroulement (5) pour un stator ou un rotor d'un moteur électrique avec un procédé selon l'une quelconque des revendications 1 à 5, comprenant
- deux dispositifs de réception (2), qui sont respectivement reliés à un guidage (21) et peuvent être déplacés dans une direction x, une direction y et une direction z d'un système de coordonnées cartésien,
- deux outils donnant la forme (4), respectivement avec un premier composant (41) et un deuxième composant (42), qui peuvent être déplacés l'un par rapport à l'autre dans une direction y d'un système de coordonnées cartésien, et
- un dispositif de transport (6), qui est conçu pour le transport des faisceaux de conducteurs (1) respectivement à une cadence de transport dans une direction x.

7. Dispositif selon la revendication 6, **caractérisé en ce que** les guidages (21) comprennent respectivement un chariot (23) et des rails (22) sur lesquels le chariot (23) est guidé, sachant qu'un des guidages (21) est disposé au-dessus des faisceaux de conducteurs (1) et l'autre des guidages (21) en dessous des faisceaux de conducteurs (1).

8. Dispositif selon la revendication 6 ou 7, **caractérisé en ce que** les dispositifs de réception (2) comportent respectivement une tête de pliage (23) avec un support de fil (231) et une joue de pliage (232).

9. Dispositif selon l'une quelconque des revendications 6 à 8, **caractérisé en ce que** les outils (4) donnant la forme comportent respectivement un troisième composant (43), qui peut être déplacé dans la direction z.
